# EUROPEAN PATENT APPLICATION

(11) **EP 4 807 123 A1**
(43) Date of publication of application: **16.09.2026**
(21) Application number: 24915209.1
(22) Date of filing: 27.12.2024
(51) Int. Cl.: E05F 15/77, B60R 21/02, B60R 13/08, E05F 15/603

(54) **SOA-BASED AUTOMOBILE PARTITION GLASS CONTROL METHOD, DEVICE, MEDIUM AND AUTOMOBILE**

(30) Priority: 02.01.2024 CN 202410003186
(71) Applicant: Chongqing Changan Automobile Co., Ltd., Chongqing 400023 (CN)
(72) Inventor: KANG, Hao, Chongqing 400023 (CN); DONG, Xiaoqiang, Chongqing 400023 (CN)
(74) Representative: Elzaburu S.L.P.
(86) International application number: PCT/CN2024/143409
(87) International publication number: WO 2025/145995

(57) **Abstract**

The present application proposes a method for controlling a vehicle partition glass based on an SOA architecture, a device, a medium and a vehicle. The SOA architecture at least includes a scenario service layer, a system service layer, an enhanced service layer, an atomic service layer, an I/O abstraction layer, and a basic service layer. The method includes: receiving, by a partition-glass enhanced control service of the enhanced service layer, a soft switch command from the scenario service layer and/or a hard switch command from the system service layer, and generating a motor control signal; receiving, by the atomic service layer, the motor control signal, and transmitting the motor control signal to a partition-glass control I/O abstraction service of the I/O abstraction layer for intervening in motor motion to control the opening and closing of a partition glass. Through the SOA architecture, the present application achieves software-hardware decoupling for controlling the vehicle partition glass, improves software reusability, and clearly defines and standardizes the service functions and interfaces of the respective layers without interfering with each other, thereby improving the diversity and control efficiency of controlling the vehicle partition glass.

## Description

This application claims the priority to Chinese Patent Application No. 202410003186.X, filed with the China National Intellectual Property Administration on January 2, 2024, entitled "METHOD FOR CONTROLLING VEHICLE PARTITION GLASS BASED ON SOA ARCHITECTURE, DEVICE, MEDIUM AND VEHICLE", the entire content of which are incorporated herein by reference.

### TECHNICAL FIELD

The present application relates to the technical field of vehicle opening and closing part control, and in particular, to the technical field of lifting control of a vehicle partition glass.

### BACKGROUND

With the continuous development of electric vehicles, the space requirement for the vehicle trunk is also increasing. Due to the limited cooling or heating capacity of the vehicle air conditioner, if the passenger compartment and the trunk are not effectively isolated during use, the workload of the air conditioner will be increased, the cooling and heating effect of the air conditioner will be greatly weakened, and the time required for cooling and heating will be prolonged. Moreover, prolonged use of the air conditioner will also pollute the environment to a certain extent. Furthermore, the current vehicle air conditioner consumes a large amount of energy, and failure to isolate the compartments will cause significant waste of resources. In addition, the increased cost of using electric vehicles will impose a considerable economic burden on consumers. Therefore, by providing a partition, not only can the trunk of the vehicle be isolated from the passenger compartment, but noise can also be effectively reduced, thereby improving the riding experience of the user. At the same time, to facilitate the user in the passenger compartment to take items from the trunk, an openable and closable partition glass is provided on the partition board. When the user needs to take an item, the partition glass can be opened to connect the trunk and the passenger compartment. The prior art CN116533894A provides a partition device for a vehicle, but this technology provides an implementation method for such a partition in terms of physical hardware structure, and does not provide a solution for how to intelligently control it.

Although the partition glass of the in-vehicle partition device also requires opening and closing control similar to that of a regular window glass, it is different from a regular window glass. The main difference lies in that its travel is short, and its opening and closing need to be performed according to the state of the partition board. That is, the opening and closing of the partition glass need to be performed after determining the state of the partition board. The partition board has two states upright and folded/retracted. The partition glass is allowed to operate only when the state of the partition board is upright.

In addition, the control of such devices in a vehicle is usually implemented through software. However, in a traditional software architecture, hardware and software are usually highly coupled, resulting in signal-based communication lacking flexibility and scalability. Minor functional changes can cause adjustments to the entire vehicle software. Based on an SOA (service-oriented architecture, service-oriented architecture), different functional units of an application can be split, the smallest functional logic is encapsulated into services, and by calling service interfaces, different functional logic modules can interact with each other, thereby achieving data interaction. In other words, SOA changes cross-ECU interaction from "signal-based communication" to "service-based communication", application servitization, allowing users to use it arbitrarily when permissions permit, making full-vehicle intelligence possible. The flexible deployment of services allows different vehicle model configurations to have different service deployments during the entire vehicle lifecycle, greatly reducing the coupling between software and hardware, and enabling faster software updates and upgrades.

The prior art CN114809855A discloses a vehicle window control system based on an SOA architecture, which controls the switching of a window glass. It combines the actual software and hardware design scheme and functional/performance requirements of an electric window system, defines the functions to be completed by each layer of service, the interfaces between each layer of service, and related data types, and achieves software-hardware decoupling and improves software reusability based on the SOA concept. However, this solution is not suitable for controlling the opening of the glass of a partition device within a vehicle.

### SUMMARY

To solve the above problems, the present application provides a method for controlling a vehicle partition glass based on an SOA architecture, a device, a medium and a vehicle, thereby improving the diversity and control efficiency of controlling the vehicle partition glass.

The technical solution of the present application is as follows.

In a first aspect, the present application provides a method for controlling a vehicle partition glass based on an SOA architecture, the system at least including an APP layer, a scenario service layer, a system service layer, an enhanced service layer, an atomic service layer, an I/O abstraction layer, and a basic service layer. The method for controlling the partition glass includes:
receiving, by a partition-glass control enhanced service of the enhanced service layer, a soft switch command from the scenario service layer and/or a hard switch command from the system service layer, and generating a motor control signal;
receiving, by the atomic service layer, the motor control signal, and transmitting the motor control signal to a partition-glass control I/O abstraction service of the I/O abstraction layer for intervening in motor motion to control the lifting/lowering and opening/closing of a partition glass.

Further, in the partition-glass control enhanced service of the enhanced service layer, a preset priority order is provided, and when a hard switch command and a soft switch command take effect simultaneously, the priority of the hard switch command is higher than that of the soft switch command.

Further, the scenario service layer includes a partition-glass control scenario service, configured to transmit a soft switch command to the partition-glass enhanced control service; and the soft switch command refers to an open or close command obtained in response to a user clicking a soft switch button. The open or close command is sent to the scenario service layer and further transmitted to the enhanced service layer.

Further, the SOA architecture further includes an APP layer and a basic service layer, where an EDC service of the APP layer receives information on a current glass position status and information on a partition board status from the basic service layer, prompts a user to send a soft switch control command for the partition glass, and sends the soft switch control command for the partition glass to the partition-glass control scenario service of the scenario service layer. Specifically, when the current glass position status is less than 50%, the soft switch sends a close command; otherwise, the soft switch sends an open command.

Further, the system service layer includes a system service for an in-vehicle button request, which receives power gear information sent by a power gear service of the enhanced service layer, information on a hard switch lock status sent by the basic service layer, and a hard switch button signal and a motor status signal sent by a service for a partition-glass in-vehicle physical switch request of the atomic service layer, determines the hard switch command and sends the hard switch command to the enhanced service layer.

Further, an in-vehicle physical switch status service for partition-glass control of the I/O abstraction layer monitors a status of whether a physical hard switch button is pressed, and reports the status to the service for the partition-glass in-vehicle physical switch request of the atomic service layer. A partition-glass control I/O abstraction service of the I/O abstraction layer monitors motor status (including an actual motor motion status, a motor position, a stall status, and an initialization status), and reports the motor status to the atomic service layer for further transmission to the basic service layer and the partition-glass control enhanced service, and simultaneously receives the motor control signal from the atomic service layer to intervene in the motor motion.

Further, when the power gear information is the ON mode, and the hard switch lock status is enabled, a motor control mode is selected as a manual control mode or an automatic control mode according to the initialization status of a motor for determining the hard switch command. When the power gear information is the OFF mode, or the hard switch lock status is locked, the hard switch command is invalid. The manual control mode refers to controlling the glass to move continuously in response to a user continuously pressing the hard switch. The automatic control mode refers to controlling the glass to move in a set manner in response to a user clicking a hard switch button a set number of times.

Further, a partition status also needs to be detected. An I/O abstraction service for a partition-glass control partition status of the I/O abstraction layer monitors the partition board status and reports the partition board status to the atomic service layer and the basic service layer. The atomic service layer further transmits the partition board status to the partition-glass control enhanced service. The basic service layer further transmits the partition board status to the EDC service in the APP layer. When the partition board status is retracted, activation of controlling the vehicle partition glass is prohibited.

In a second aspect, the present application further provides an electronic device, including: one or more processors; a storage device configured to store one or more programs, where when the one or more programs are executed by the one or more processors, the electronic device is enabled to implement the method for controlling the vehicle partition glass based on the SOA architecture provided in the above technical solution.

In a third aspect, the present application further provides a computer-readable storage medium, having a computer program stored thereon, where when the computer program is executed by a processor of a computer, the computer is enabled to execute the method for controlling the vehicle partition glass based on the SOA architecture as described above. The computer-readable storage medium may be included in the electronic device described in the above embodiments, or may exist independently without being assembled into the electronic device.

In a fourth aspect, the present application further provides a vehicle, the vehicle including: one or more processors; a storage device configured to store one or more programs, where when the one or more programs are executed by the one or more processors, the vehicle is enabled to implement the method for controlling the vehicle partition glass based on the SOA architecture as described above.

In a fifth aspect, the present application further provides a computer program, where when the computer program is executed by a processor, the method for controlling the vehicle partition glass based on the SOA architecture as described above is implemented.

In a sixth aspect, the present application further provides a computer program product, including a computer program, where when the computer program is executed by a processor, the method for controlling the vehicle partition glass based on the SOA architecture as described above is implemented.

The advantages of the present application are as follows.

By designing the partition-glass control under the SOA architecture, the present application splits different functional units for controlling the vehicle partition glass, encapsulates the smallest functional logic into services, and by calling service interfaces, enables different functional logic modules to interact with each other, achieving data interaction and software-hardware decoupling, and improving software reusability. The functions and interfaces of each layer of service are clearly defined and standardized without interfering with each other, thereby improving the diversity and control efficiency of controlling the vehicle partition glass.

The present application adds a partition-glass control enhanced service in the enhanced service layer, using both hard switch logic and soft switch logic to select and execute a task according to a preset priority order for the received soft switch command and the received hard switch command, so as to control the partition glass. The requirement for real-time glass position is reduced, and the requirement for motor hardware is further reduced, resulting in streamlined control logic and clear software structure division.

To adapt to the control requirements of the partition glass of the partition device, the present application, based on the vehicle window glass, eliminates the requirement for glass position information, adopts a glass control logic suitable for a self-resetting switch, and adds an initialization function of the glass position to adapt to the installation and use of the glass, making the control more reasonable.

### BRIEF DESCRIPTION OF DRAWINGS

To more clearly illustrate the technical solutions in the embodiments of the present application or the prior art, the drawings required for use in the description of the embodiments or the prior art will be briefly introduced below. Obviously, the drawings in the following description are some embodiments of the present application. For those of ordinary skill in the art, other drawings can be obtained based on these drawings without creative effort.
FIG. 1 is a flowchart of a method for controlling a vehicle partition glass based on an SOA architecture according to an embodiment of the present application;
FIG. 2 is an interaction diagram of an SOA software architecture for implementing the control of a vehicle partition glass according to an embodiment of the present application;
FIG. 3 is an overall flowchart of hard switch control according to an embodiment of the present application;
FIG. 4 is a flowchart of a manual mode of hard switch control according to an embodiment of the present application;
FIG. 5 is a flowchart of an automatic mode of hard switch control according to an embodiment of the present application.

### DESCRIPTION OF EMBODIMENTS

The technical solutions in the embodiments of the present application will be clearly and completely described below in conjunction with the drawings in the embodiments of the present application. It is to be understood that the specific embodiments described herein are only used to explain the related application, and are not intended to limit the application. In addition, it should be noted that, for ease of description, only the parts related to the related application are shown in the drawings.

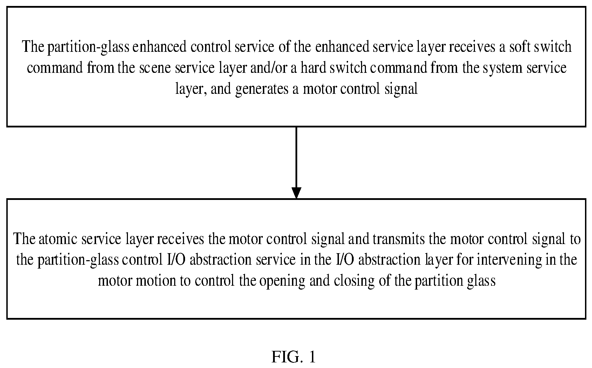

In an embodiment of the present application, a method for controlling a vehicle partition glass based on an SOA architecture is provided. The method is described in detail below with reference to FIG. 1 to FIG. 5.

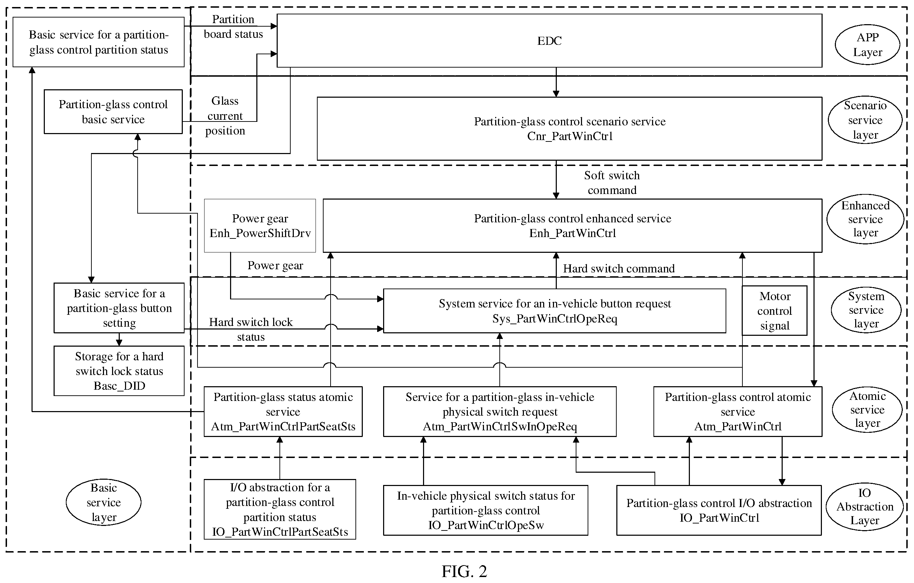

The SOA architecture implementing the method for controlling the vehicle partition glass includes an APP layer, a scenario service layer, a system service layer, an enhanced service layer, an atomic service layer, an I/O abstraction layer, and a basic service layer, as specifically shown in FIG. 2.

The APP layer is configured to be open up for realizing personalized customization, and cooperates with the scenario service layer to support flexible arrangement of user scenarios. A program in an EDC (Experience Domain Controller, Experience Domain Controller) of the APP layer prompts a user to send a soft switch control command for the partition glass according to a current glass position status and a partition board status. At the same time, the EDC can set a lock status of the hard switch according to user needs, and transmit a signal to the basic service layer. Specifically, after acquiring the partition board status, the APP layer can be used for partition-glass control, partition board control, or other related functions. When the partition board is folded, both the soft switch command and the hard switch command are restricted. The current position of the partition glass is used by the EDC to determine the soft switch command to be sent (i.e., whether to send an open command or a close command). When the current position of the glass is less than 50% (0% means fully closed), i.e., the glass is less than a half-open position, the soft switch sends a close command; otherwise, the soft switch sends an open command.

The scenario service layer includes a partition-glass control scenario service, configured to send different partition-glass control request parameters, i.e., a soft switch command, to the enhanced service layer.

The enhanced service layer is configured to select and execute a task for the received soft switch command and/or the received hard switch command according to a preset priority order, and return request parameters. It includes a power gear service Enh_PowerShiftDrv, mainly configured to provide current power gear information to the system service layer. It also includes a partition-glass control enhanced service Enh_PartWinCtrl, mainly configured to receive a soft switch command from the scenario service layer, a hard switch signal from the system service layer, and a partition board status and a motor status sent from the atomic service layer, and finally output a motor control signal to the atomic service layer according to a certain judgment logic.

The system service layer is configured to determine, according to various trigger sources, whether a preset condition is met, and call the enhanced service to realize the basic function of the control of the vehicle partition glass. In the system service layer, a system service for an in-vehicle button request and a motor control signal are included. The system service for the in-vehicle button request Sys_PartWinCtrlOpeReq outputs a hard switch control command to the enhanced service layer according to a certain logic, based on the switch status reported by the basic service layer, the power gear signal transmitted from the enhanced service layer, and the hard switch button signal uploaded by the atomic service.

The atomic service layer is configured to shield the impact of the change in the I/O abstraction layer on the enhanced service layer, reduce the modification to software when functions change, and achieve decoupling. In the atomic service layer, a partition-glass status atomic service, a service for a partition-glass in-vehicle physical switch request, and a partition-glass control atomic service are included. The partition-glass status atomic service Atm_PartWinCtrlPartSeatSts receives a partition board status signal from the I/O abstraction layer, and reports the partition board status signal to the basic service layer and the enhanced service layer. The service for the partition-glass in-vehicle physical switch request Atm_PartWinCtrlSwInOpeReq receives a button signal, a motor position signal, and an initialization status from the I/O abstraction layer, and transmits them to the system service layer. The partition-glass control atomic service Atm_PartWinCtrl receives a motor control signal from the enhanced service layer and transmits the motor control signal to the I/O abstraction layer to control motor motion; and receives a motor status signal from the I/O abstraction layer and transmits the motor status signal to the enhanced service layer.

The I/O abstraction layer is configured to be bound to the hardware layer, shielding the hardware design and specific implementation methods. Among them, a partition-glass status I/O service IO_PartWinCtrlPartSeatSts monitors a partition board status and reports the partition board status to the atomic service layer. An I/O service for a partition-glass in-vehicle physical switch request IO_PartWinCtrlOpeSw monitors a status of whether a physical hard switch is pressed, and reports the signal to the atomic service layer. A partition-glass control I/O service IO_PartWinCtrl monitors a motor status (including an actual motor motion status, a motor position, a stall status, an initialization status) and receives a control command from the atomic service layer to control motor motion.

The basic service layer is configured to provide interfaces for signal-to-service and service-to-signal conversion, and provide an ordinary non-volatile storage function, a DTC storage function, a configuration word storage function, a sleep/wake management function, and an operation mode management function. In the basic service layer, a basic service for a partition-glass control partition status Basc_PartWinCtrlPartSeatSts transmits a partition board status from the atomic service layer to the EDC. A partition-glass control basic service Basc_PartWinCtrl receives glass position information uploaded from the atomic service layer and transmits the glass position information to the EDC. A basic service for a partition-glass button setting Basc_PartWinCtrlSetting receives a hard switch lock signal sent by the EDC, and calls downward a storage service for the hard switch lock status Basc_DID to write the lock status of the hard switch into an EEPROM, while simultaneously transmitting the signal to a system service for an in-vehicle button request Sys_PartWinCtrlOpeReq in the system service layer.

Referring to FIG. 1, the method for controlling a vehicle partition glass based on an SOA architecture specifically includes the following steps:
step 1, The partition-glass control enhanced service of the enhanced service layer receives a soft switch command from the scenario service layer and/or a hard switch command from the system service layer, and generates a motor control signal. In the partition-glass control enhanced service of the enhanced service layer, a priority order is preset, and when a hard switch command and a soft switch command take effect simultaneously, the priority of the hard switch command is higher than that of the soft switch command;
step 2, the atomic service layer receives the motor control signal, and transmits the motor control signal to a partition-glass control I/O abstraction service of the I/O abstraction layer for intervening in motor motion to control the lifting/lowering and opening/closing of a partition glass.

In an embodiment of the present application, the soft switch command refers to an open or close command obtained in response to a user clicking a soft switch button, and sent to the scenario service layer, and further transmitted to the enhanced service layer. The scenario service layer includes a partition-glass control scenario service, configured to transmit a soft switch command to the partition-glass enhanced control service. The EDC service of the APP layer receives information on a current glass position status and a partition board status from the basic service layer, prompts a user to send a soft switch control command for the partition glass, and sends the soft switch control command for the partition glass to the partition-glass control scenario service of the scenario service layer. That is, the logic of the soft switch command is relatively simple. A user can send a full open or full close command to the scenario service layer by clicking a soft switch button provided on the EDC screen, and the enhanced service layer determines whether to execute it downward. At the same time, the user can also click a hard switch lock button on the screen to disable the function of the hard switch button.

In an embodiment of the present application, the hard switch command refers to the system service for the in-vehicle button request of the system service layer receiving power gear information sent by a power gear service of the enhanced service layer, hard switch lock status information sent by the basic service layer, and a hard switch button signal and a motor status sent by a service for a partition-glass in-vehicle physical switch request of the atomic service layer, thereby determining and sending the hard switch command to the enhanced service layer.

In an embodiment of the present application, when the power gear information is the ON mode, and the hard switch lock status is enabled, a motor control mode is selected as a manual control mode or an automatic control mode according to the initialization status of the motor, thereby determining the hard switch command. When the power gear information is the OFF mode, or the hard switch lock status is locked, the hard switch command is invalid. The manual control mode refers to controlling the glass to move continuously in response to a user continuously pressing a hard switch. The automatic control mode refers to controlling the glass to move in a set manner in response to a user clicking a hard switch button a set number of times, i.e., different set numbers correspond to different movement manners.

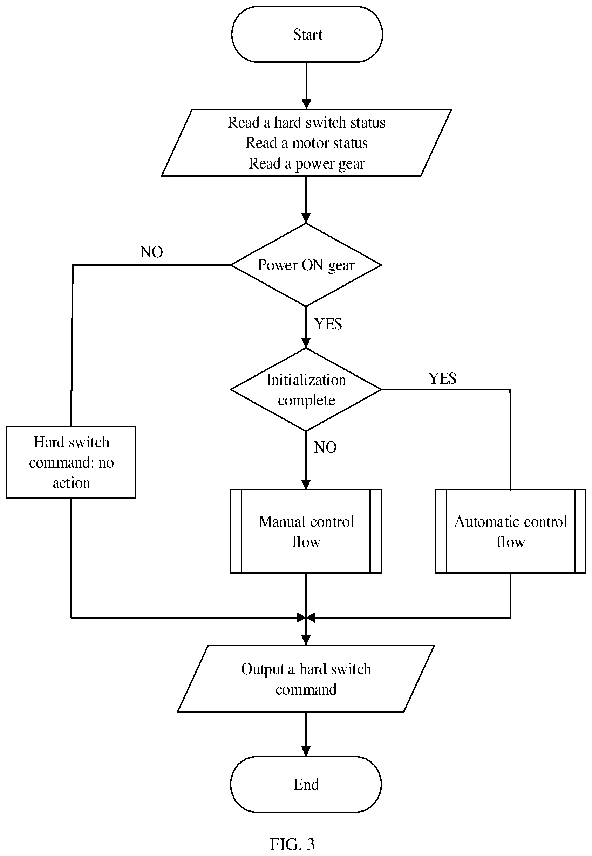

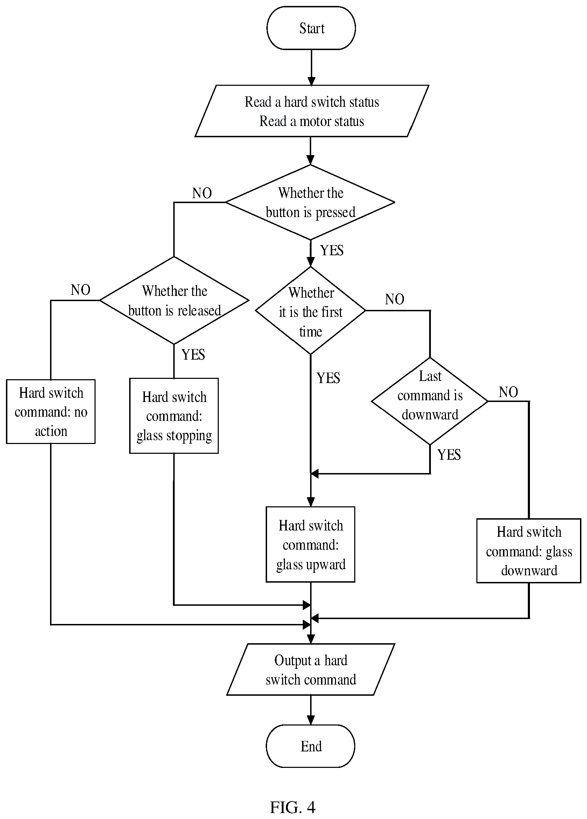

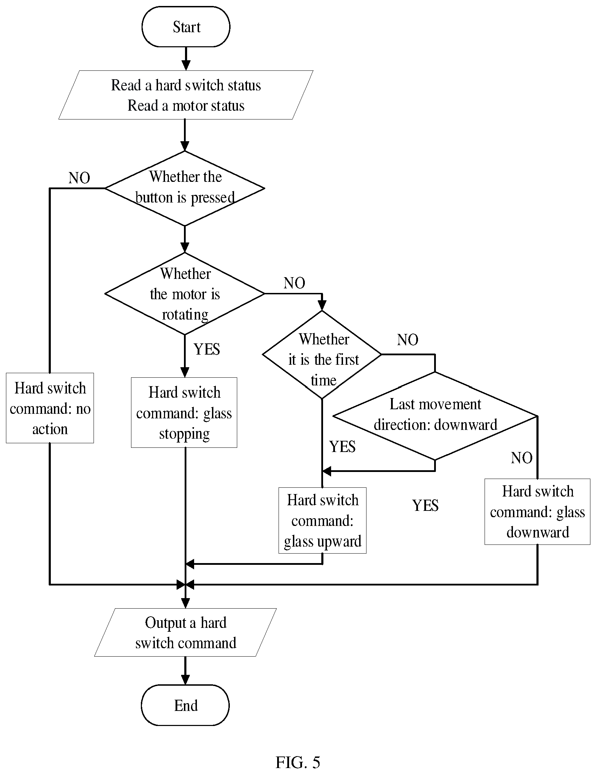

In an embodiment of the present application, the overall flow of the hard switch control logic is shown in FIG. 3. First, a motor status and a hard switch status are read through the atomic service layer, and a power gear status is read through the enhanced service layer. Then, the current power gear status is determined. Under the power OFF mode, all hard switch commands are treated as no-action commands. Under the power ON mode, the hard switch command is valid. It is determined whether the motor initialization is completed. If so, the process proceeds to an automatic control flow; otherwise, the process proceeds to a manual control flow. The two control modes are described in detail below:
a. The manual control mode means that the user needs to continuously press the hard switch for the glass to maintain continuous motion in a certain direction. When the button is released, the glass stops moving immediately. As shown in FIG. 4, the detailed flow is as follows: first, a motor status and a hard switch status are read. Then, it is determined whether a button is pressed or released. When a button release state is detected, the hard switch command causes the glass to stop moving. When the button is pressed, if it is the first press or the last command was a downward movement command, a glass upward movement command is sent; otherwise, a glass downward movement command is sent.
b. The automatic mode means that the user only needs to click the hard switch button once, and the glass will automatically move continuously in a certain direction until it reaches a limit position. As shown in FIG. 5, the detailed flow is as follows: first, a hard switch status and a motor status are read, and it is determined whether the hard switch button is pressed. When the button is pressed, if the motor is currently moving, the hard switch command causes the motor motion to stop. If the motor is in a stationary state, the hard switch command causes the motor to rotate. The rotation direction is determined as: if it is the first press or the last command was a downward movement command, then this command causes the glass to move upward; otherwise, this command causes the glass to move downward.

In an embodiment of the present application, a hard stop method is adopted to stop the partition glass, i.e., the glass stopping motion relies on motor stall. In the manual mode, the motor stop only requires detecting a falling edge from a high level to a low level; pressing the button again causes reversal. In the automatic mode, a button press is detected during glass motion, which triggers a stop; pressing again triggers reversal.

In an embodiment of the present application, under an uninitialized condition, the current position of the glass cannot be known, and both the automatic mode of the hard switch button and the soft switch function will be disabled. The initialization process of the partition glass position is as follows: using the manual mode of the hard switch to control the glass upward to reach a limit position, the motor stalls and stops; then, continuing to use the manual mode to control the glass downward to reach a lower limit position, the motor stalls and stops. At this point, the initialization of the partition glass is completed, the current position information of the glass is known, the hard switch automatically switches to the automatic mode, and the soft switch function is valid.

In an embodiment of the present application, an in-vehicle physical switch status service for partition-glass control of the I/O abstraction layer monitors a status of whether a physical hard switch button is pressed, and reports the status to the service for the partition-glass in-vehicle physical switch request of the atomic service layer. A partition-glass control I/O abstraction service of the I/O abstraction layer monitors the motor status (including an actual motor motion status, a motor position, a stall status, and an initialization status), and reports the motor status to the atomic service layer for further transmission to the basic service layer and the partition-glass control enhanced service, and simultaneously receiving the motor control signal from the atomic service layer to intervene in the motor motion.

In an embodiment of the present application, an I/O abstraction service for a partition-glass control partition status of the I/O abstraction layer monitors the partition board status and reports the partition board status to the atomic service layer and the basic service layer. The atomic service layer further transmits the partition board status to the partition-glass control enhanced service. The basic service layer further transmits the partition board status to the EDC service in the APP layer. When the partition board status is retracted, activation of controlling the vehicle partition glass is prohibited.

As can be seen from the above embodiments, the control of the partition glass has the following characteristics: (1) The switch type of the partition glass is a self-resetting switch. The IO abstraction layer needs to monitor whether the button is pressed, and the hard switch has two working modes, a manual mode and an automatic mode. The selection of the two modes is determined based on whether the partition glass is initialized. In the manual mode, the button signal needs to be continuously at a high level; in the automatic mode, a signal transition needs to be detected. (2) In terms of control logic, since the partition glass does not require a window opening degree (a specific glass position), the command for controlling the glass is not a specific window position, but a simple open/close command. The hard switch controlling the opening/closing of the glass can only rely on the last command. By default, the first command is for closing, and the next hard switch command is opposite to the last one. The glass reaching a limit position is indicated by motor stall, rather than specific glass position information. (3) In terms of software architecture, the priority processing of the partition glass only involves the priority of the soft and hard switches, which can be achieved by presetting a priority order in the partition-glass enhanced control service of the enhanced service layer. When a hard switch command and a soft switch command take effect simultaneously, the priority of the hard switch command is higher than that of the soft switch command.

In an embodiment of the present application, an electronic device is also provided, including: one or more processors; a storage device configured to store one or more programs, where when the one or more programs are executed by the one or more processors, the electronic device is enabled to implement the method for controlling the vehicle partition glass based on an SOA architecture provided in each of the above embodiments.

In an embodiment of the present application, a computer-readable storage medium is also provided, having a computer program stored thereon, where when the computer program is executed by a processor of a computer, the computer is enabled to execute the method for controlling the vehicle partition glass based on an SOA architecture as described above. The computer-readable storage medium may be included in the electronic device described in the above embodiments, or may exist independently without being assembled into the electronic device.

In an embodiment of the present application, a vehicle is also provided, including: one or more processors; a storage device configured to store one or more programs, where when the one or more programs are executed by the one or more processors, the vehicle is enabled to implement the method for controlling the vehicle partition glass based on an SOA architecture provided in each of the above embodiments.

In an embodiment of the present application, a computer program is also provided, where when the computer program is executed by a processor, the method for controlling the vehicle partition glass based on an SOA architecture provided in each of the above embodiments is implemented.

In an embodiment of the present application, a computer program product is also provided, including a computer program, where when the computer program is executed by a processor, the method for controlling the vehicle partition glass based on an SOA architecture provided in each of the above embodiments is implemented.

The above descriptions are only embodiments of the present application and are not intended to limit the protection scope of the present application. Any modifications, equivalent substitutions and improvements made within the spirit and scope of the present application shall be included in the protection scope of the present application.

## Claims

1. A method for controlling a vehicle partition glass based on an SOA architecture, the SOA architecture comprising a scenario service layer, a system service layer, an enhanced service layer, an atomic service layer, and an I/O abstraction layer; and the method comprising:
receiving, by a partition-glass control enhanced service of the enhanced service layer, a soft switch command from the scenario service layer and/or a hard switch command from the system service layer, and generating a motor control signal;
receiving, by the atomic service layer, the motor control signal, and transmitting the motor control signal to a partition-glass control I/O abstraction service of the I/O abstraction layer for intervening in motor motion to control the opening and closing of a partition glass.

2. The method for controlling the vehicle partition glass according to claim 1, wherein the soft switch command from the scenario service layer and the hard switch command from the system service layer are received by the partition-glass control enhanced service, and when the hard switch command and the soft switch command take effect simultaneously, a priority of the hard switch command is higher than that of the soft switch command.

3. The method for controlling the vehicle partition glass according to claim 1 or 2, wherein the soft switch command is transmitted by the scenario service layer to the partition-glass control enhanced service of the enhanced service layer through a partition-glass control scenario service; and the soft switch command refers to an open or close command obtained in response to a user clicking a soft switch button.

4. The method for controlling the vehicle partition glass according to claim 3, wherein the SOA architecture further comprises an APP layer and a basic service layer, receiving, by an EDC service of the APP layer, information on a current glass position status and information on a partition board status uploaded from the basic service layer, prompting a user to send a soft switch control command for the partition glass, and sending the soft switch control command for the partition glass to the partition-glass control scenario service of the scenario service layer; receiving, by a basic service for a partition-glass button setting of the basic service layer, information on a hard switch lock status sent by the EDC service, and calling downward a storage service for the hard switch lock status to write the information on the hard switch lock status into a memory, and simultaneously transmitting the hard switch lock status information to a system service for an in-vehicle button request in the system service layer.

5. The method for controlling the vehicle partition glass according to claim 4, wherein receiving, by the system service layer, through the system service for the in-vehicle button request, power gear information sent by a power gear service of the enhanced service layer, the information on the hard switch lock status sent by the basic service layer, and a hard switch button signal and information on a motor status sent by a service for a partition-glass in-vehicle physical switch request of the atomic service layer, determining the hard switch command, and sending the hard switch command to the enhanced service layer.

6. The method for controlling the vehicle partition glass according to claim 5, wherein monitoring, by the I/O abstraction layer, through an in-vehicle physical switch status service for partition-glass control, a status of whether a physical hard switch button is pressed, and reporting the status to the service for the partition-glass in-vehicle physical switch request of the atomic service layer; and monitoring, by the I/O abstraction layer, through the partition-glass control I/O abstraction service, the motor status, reporting the motor status to the atomic service layer for further transmission to the basic service layer and the enhanced service layer, and simultaneously receiving the motor control signal from the atomic service layer to intervene in the motor motion.

7. The method for controlling the vehicle partition glass according to claim 5 or 6, wherein the motor status comprises an actual motor motion status, a motor position, a stall status, and an initialization status.

8. The method for controlling the vehicle partition glass according to claim 7, wherein when the power gear information is an ON mode, and the hard switch lock status is enabled, a motor control mode is selected as a manual control mode or an automatic control mode according to the initialization status of a motor for determining the hard switch command; when the power gear information is an OFF mode, or the hard switch lock status is locked, the hard switch command is invalid.

9. The method for controlling the vehicle partition glass according to claim 8, wherein if the motor status is initialization completed, the automatic control mode is entered; if the motor status is uninitialized, the automatic control mode of a hard switch button and a soft switch command are both prohibited from being enabled, and the manual control mode is entered.

10. The method for controlling the vehicle partition glass according to claim 9, wherein a process of an initialization is: using a manual control mode of a hard switch to control the glass upward to reach an upper limit position, a motor stalls and stops; continuing to use the manual control mode to control the glass downward to reach a lower limit position, the motor stalls and stops; the initialization of the partition glass is completed, current position information of the glass is known, the hard switch automatically switches to the automatic control mode, and a soft switch function is valid.

11. The method for controlling the vehicle partition glass according to any one of claims 8 to 10, wherein the manual control mode refers to controlling the glass to move continuously in response to a user continuously pressing the hard switch; the automatic control mode refers to controlling the glass to move in a set manner in response to a user clicking the hard switch button a set number of times.

12. The method for controlling the vehicle partition glass according to any one of claims 4 to 11, wherein monitoring, by an I/O abstraction service for a partition-glass control partition status of the I/O abstraction layer, the partition board status and reporting the partition board status to the atomic service layer and the basic service layer, transmitting, by the atomic service layer, the partition board status to the partition-glass control enhanced service, transmitting, by the basic service layer, the partition board status to the EDC service in the APP layer; and prohibiting activation of controlling the vehicle partition glass when the partition board status is retracted.

13. An electronic device, wherein the electronic device comprises:
one or more processors;
a storage device, configured to store one or more programs, wherein when the one or more programs are executed by the one or more processors, the electronic device is enabled to implement the method for controlling the vehicle partition glass based on the SOA architecture according to any one of claims 1 to 12.

14. A computer-readable storage medium, wherein a computer program is stored thereon, wherein when the computer program is executed by a processor of a computer, the computer is enabled to execute the method for controlling the vehicle partition glass based on the SOA architecture according to any one of claims 1 to 12.

15. A vehicle, wherein the vehicle comprises:
one or more processors;
a storage device, configured to store one or more programs, wherein when the one or more programs are executed by the one or more processors, the vehicle is enabled to implement the method for controlling the vehicle partition glass based on the SOA architecture according to any one of claims 1 to 12.

16. A computer program, wherein when the computer program is executed by a processor, the method for controlling the vehicle partition glass based on the SOA architecture according to any one of claims 1 to 12 is implemented.

17. A computer program product, comprising a computer program, wherein when the computer program is executed by a processor, the method for controlling the vehicle partition glass based on the SOA architecture according to any one of claims 1 to 12 is implemented.
